Europäisches Patentamt

(19) European Patent Office

Office européen des brevets

(11) Publication number: **0 098 160**
**A1**

(12) **EUROPEAN PATENT APPLICATION**

(21) Application number: 83303750.0

(22) Date of filing: 29.06.83

(51) Int. Cl.$^3$: **G 01 S 13/76**

(30) Priority: 29.06.82 GB 8218811

(43) Date of publication of application:
11.01.84 Bulletin 84/2

(84) Designated Contracting States:
AT BE CH DE FR IT LI LU NL SE

(71) Applicant: DECCA LIMITED
Western Road
Bracknell Berkshire RG12 1RG(GB)

(72) Inventor: Ingram, Stuart John
89 Liddle Drive Bo'ness
West Lothian EH51 OPA Scotland(GB)

(74) Representative: Cross, Rupert Edward Blount et al,
BOULT, WADE & TENNANT 27 Furnival Street
London EC4A 1PQ(GB)

(54) Method and apparatus for measuring distance.

(57) Apparatus for measuring distance has an interrogator which transmits an interrogation pulse (S2) to a transponder where it is received (pulse S5) after a time delay ($t_d$). The interrogator measures the time of occurrence of a pulse (S4) which is delayed by the signal processing time delays ($t_1$) in the interrogator. The transponder responds to pulse (S5) after internal processing response time delays ($t_2$) and ($t_x$) by transmitting consecutively a reply pulse (S11) and echo pulse (S17) back to the interrogator where they are received as pulses (S9) and (S15) and produce pulses (S10) and (S16) after respective time delays ($t_1$). Echo pulse (S17) is produced in response to reception in the transponder via an internal signal path of the first reply pulse (S11) delayed by the internal processing delay time of the transponder. The interrogator measures the times of occurrence of pulses (S10) and (S16) and determines ($t_A$) and ($t_B$). It is shown how subtraction of ($t_B$) from ($t_A$) produces a time duration dependant on ($t_d$) but independant of ($t_1$, $t_2$) and ($t_x$).

FIG. 2.

METHOD AND APPARATUS FOR MEASURING DISTANCE

This invention relates to the measurement of distance, and particularly though not exclusively measurement of distance between a local and a remote station by measuring the flight time of a radio pulse sent from the local station, received by the remote station and echoed back by the remote station for reception at the local station. Various radio ranging systems are known for this purpose, typically comprising an interrogation unit at the local station, which may be a ship for example, and a transponder unit at the remote station which automatically transmits a reply pulse on receipt of an interrogation pulse from the interrogation unit.

It is known that with such arrangements allowance has to be made for the response time of the transponder units, ie., the delay between receiving an interrogation pulse and transmitting a reply pulse resulting from the internal processing response time of the transponder unit. The normal practice has been to calibrate the processing equipment at the interrogation unit to cancel such processing delays at the transponder units. This has required substantial setting up procedures to be observed following installation of the interrogation unit to ensure proper calibration. Furthermore re-calibration must be undertaken from time to time to ensure continued accuracy of the system.

According to one aspect of the present invention, a method of measuring the distance along a signal path between local and remote stations comprises the steps of:

a) transmitting an interrogation pulse along the signal path from an interrogation unit at the local station,

b) receiving the interrogation pulse at a transponder . unit at the remote station and transmitting in response thereto a reply pulse along the signal path, wherein the transmission of the reply pulse is delayed following receipt of the interrogation pulse by the internal processing response time of said transponder unit,

c) further transmitting from said responder unit an echo pulse, wherein the echo pulse is transmitted in response to reception by said transponder unit through a predetermined internal path in said transponder unit of an immediately preceding pulse transmitted by said transponder unit so that the time delay between said echo pulse and said immediately preceding transmitted pulse corresponds to said internal processing response time,

d) receiving at said interrogation unit said pulses transmitted along said signal path from said transponder unit,

e) measuring a first time interval between transmission from said interrogation unit of said interrogation pulse and reception at said interrogation unit of said reply pulse,

f)  measuring a second time interval between reception
at said interrogation unit of said echo pulse and of said
immediately preceding transmitted pulse, and

g)  calculating from said first and second time intervals
and the speed of propagation of said pulses along said
signal path a value for the distance between said stations
which is substantially independant of said internal
processing response time.

It can be seen that using the "self echoing"
procedure described above it is possible for the distance
measuring method to be self calibrating in that the process-
ing delay time in the transponder unit can be determined at
the interrogation unit by measuring the time delay between
the echo pulse and the pulse immediately before it.  This
measured processing time delay can then be employed when
calculating the distance to substantially eliminate effects
of the processing delay time in the transponder unit.

It will be appreciated that a common application
of the above method is in radio ranging wherein the signal
path comprises a path of electromagnetic radiation between
the local and remote stations, and wherein the speed of
propagation is the speed of light.  However other applications of the method are also envisaged including where the
remote and local stations are interconnected by a defined
transmission line, such as a cable or optical fibre, or
where the pulse comprises an ultrasonic pulse transmitted
either in air or in water.

Conveniently, said interrogation pulse is also received at said interrogation unit by a predetermined internal path in said interrogation unit, whereby processing delays in the reception of pulses by said interrogation unit are cancelled when measuring said time intervals.

In one arrangement, said immediately preceding pulse transmitted by said transponder unit is constituted by said reply pulse. In this arrangement it can be seen that the transponder unit normally responds to an interrogation pulse by transmitting one reply pulse followed by the echo pulse.

In another arrangement, said immediately preceding pulse transmitted by said transponder unit may be a delayed pulse transmitted a preset time delay after transmission of the reply pulse. In this arrangement the transponder unit transmits three pulses on receipt of an interrogation pulse the delay between the first and second reply pulses being preset and the internal processing response time of the transponder being represented by the time interval between the second reply pulse and the final echo pulse.

In another aspect of the present invention, apparatus for measuring the distance along a signal path between local and remote stations comprises an interrogation unit at said local station and a transponder unit at said remote station;

the interrogation unit having a transmitter to transmit
interrogation pulses along the signal path, a receiver
to receive pulses returning from the transponder unit and
a time measuring unit to calculate said distance from the
time spacing of the interrogation and returning pulses;
the transponder unit having a receiver to receive interrogation pulses, a transmitter adapted to transmit at
least a first reply pulse along the signal path in response
to reception of an interrogation pulse wherein the first
reply pulse is delayed following receipt of the interrogation pulse by the internal processing response time of
the transponder unit, a predetermined internal path whereby
pulses transmitted by the transmitter of the transponder
are fed to be received by the receiver of the transponder,
and trigger control means responsive to reception by said
internal path of the reply pulse, or the last of the
reply pulses, to trigger the tansmitter to transmit an
echo pulse with a delay following the immediately preceding
reply pulse corresponding to said internal processing
response time;
said time measuring unit of the interrogation unit being
adapted to measure a first time interval between transmission
of an interrogation pulse and reception of the first reply
pulse, and a second time interval between reception of said
echo pulse and of the immediately preceding reply pulse,
and to calculate from said intervals and the speed of
propagation of said pulses along said signal path a value for said distance which is substantially independant of said internal processing response time.

The present invention further envisages the provision of an interrogation unit as described above and for use in the distance measuring method described previously.

Still further, the invention envisages the provision of a transponder unit as described above for use in the distance measuring method described previously.

In a further aspect of the present invention there is provided a position location system comprising an interrogation unit as described above mounted at a local station of which the position is to be found and a plurality of transponder units, as described above, mounted at respective known remote stations, the interrogation and transponder units being arranged such that the transponder units are independantly addressable by the interrogation unit to transmit reply and echo pulses when addressed by suitably coded interrogation pulses.

In this context, it will be appreciated that the interrogation, reply and echo pulses mentioned above need not in fact be constituted by a single uniform pulse but may each comprise a coded signal of relatively short duration, for example comprising a burst of code pulses. In the description of the invention herein and in the following claims, references to interrogation, reply and echo pulses should be construed accordingly to include the case where each such pulse is constituted by a short duration coded signal which may include a burst of pulses.

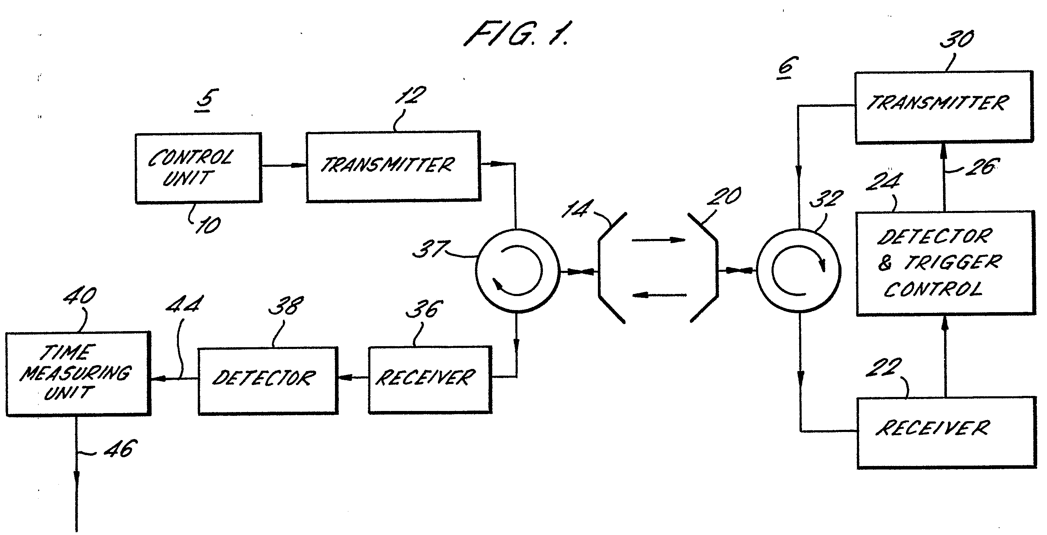

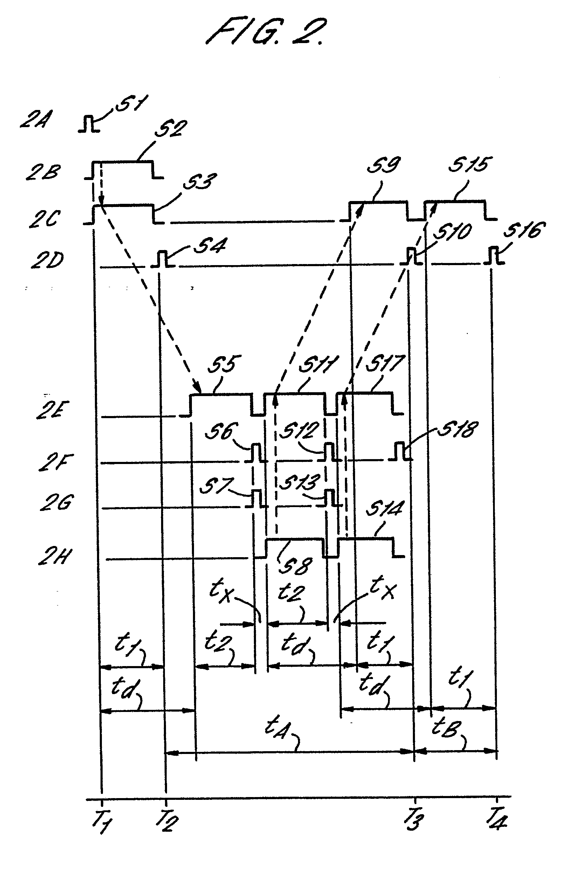

An example of the present invention will now be described in more detail with reference to the accompanying drawings in which Figure 1 is a block schematic diagram illustrating an interrogation unit and transponder unit combination embodying the present invention and Figure 2 is a timing diagram illustrating the operation of the embodiment shown in Figure 1.

Referring to Figure 1, the illustrated apparatus comprises an interrogation unit 5, which is positioned at a local station, and a transponder unit 6 which is positioned at a remote station from which the distance to the local station is to be measured. Generally speaking, the apparatus operates by the interrogation unit 5 transmitting an interrogation pulse or signal by radio to the transponder unit 6, which responds to receipt of the interrogation pulse by transmitting further radio pulses back to the interrogation unit. The interrogation unit measures the distance from the transponder unit as a function of the time taken for it to receive the reply. As mentioned before, in order to obtain high accuracy of the distance measured, it is important to compensate for the extra time delay introduced by the internal processing response time of the transponder unit, that is the time for the transponder unit to react by transmitting a reply pulse or signal following receipt of an interrogation pulse or signal.

The interrogation unit 5 comprises a transmitter 12 which is controlled by a control unit 10. In response to the control unit 10, the transmitter 12 energises an antenna 14 to transmit an interrogation pulse or signal to the transponder unit 6.

The transponder unit 6 has an antenna 20 and a receiver 22 which processes the received interrogation pulse and passes it to a detector and trigger control unit 24. The unit 24 is connected by line 26 to a transmitter 30. This transmitter responds to the detector 24 by transmitting a reply pulse via the antenna 20 to the interrogation unit 5. A circulator 32 is provided between the transmitter and receiver paths in the normal way.

The reply pulse is received at the interrogation unit 5 by the antenna 14 and is fed to receiver circuitry 36 which may be similar to the circuitry 22 in the transponder unit 6. As in the transponder unit, a circulator 37 is provided between the transmitter and receiver paths in the interrogation unit. The receiver circuitry 36 is connected to a detector 38 which produces pulse outputs in response to each received radio frequency pulse. These pulse outputs are fed to a time measuring unit 40 by line 44.

In a manner to be described, the time measuring unit processes the pulses received on line 44 to produce output signals on a line 46 whose values are proportional to the distance between the interrogation unit 5 and the transponder unit 6 and in which internal processing re--sponse time delays within the circuits of both the interrogation unit 5 and, especially, the transponder unit 6 are substantially eliminated.

The operation of the apparatus of Figure 1 will now be described with the aid of the timing diagram of Figure 2. The waveforms in Figure 2 represent any kind of modulation generated from, and on reception producing, a pulse.

It is assumed that the control unit 10 initiates the transmitter 12 at time $T_1$, and the control unit 10 therefore produces a trigger pulse S1 at this time as shown by waveform 2A. This causes the transmitter unit 12 to be initiated, as shown by waveform 2B, to transmit an interrogation pulse S2 via the antenna 14. This pulse is not only transmitted to the transponder unit 6 but is also received by the receiving circuitry 36 through a predetermined internal path.

The internal path by which the pulse reaches the receiving circuitry 36 may be via the nominally isolated path in the circulator 37 or by reflection at the antenna 14 or may be a path provided specifically to convey the transmitted pulse to the receiver, and the received pulse is shown at S3 of waveform 2C. There is substantially no time delay between the transmitted pulse of waveform 2B and the received pulse of waveform 2C. The received pulse S3 is processed by the receiving circuitry 36 and causes detector 38 to produce an output pulse S4 as shown in waveform 2D, and the pulse S4 is fed to the time measuring unit 40 on the line 44, the pulse S4 occurring at time $T_2$. The time delay $t_1$ between $T_1$ and $T_2$ is a function of the operation of the transmitter and receiver circuitry.

The generation of interrogation pulses to be transmitted and the processing of the received signal may be advantageously performed at a lower frequency than the frequency at which the transmitted pulses are actually radiated from the antenna. In this case the internal path provided to convey the pulse from the transmitter to the receiver may convey the pulse at the lower frequency, thereby omitting from the time-compensation process the response time delays in the transmitter and receiver at the higher frequency which may, as a result of the frequency being higher, be small compared with the time delays in the transmitter and the receiver at the lower frequency.

The interrogation pulse S2 transmitted by the antenna 14 is received by the antenna 20 of the transponder unit 6 after a time delay shown as $t_d$ in Figure 2, the received signal S5 being shown in waveform 2E (the dashed lines in Figure 2 link each transmitted signal with the consequent received signals). Time $t_d$ is a function of the separation distance between the units 5 and 6. The received pulse is processed by the receiving circuitry 22 and detected by the detector 24 to produce a pulse S6 (waveform 2F). After substantially no time delay, this pulse produces a trigger pulse S7 (waveform 2G, Figure 2) which causes the transmitter 30 to energise the antenna 20 of the transponder unit 6 to emit a reply pulse S8 (waveform 2H).

Reply pulse S8 is transmitted to the interrogation unit 5 and received there after the time delay $t_d$ as shown by pulse S9 (waveform 2C). The received pulse S9 is processed by the receiving circuitry 36 and causes the detector unit 38 to produce a pulse S10 (waveform 2D) at a time $T_3$ which is passed to the time measuring unit 40 on the line 44.

The transmitted reply pulse S8 from the transponder unit 6 is also received by the receiving circuitry 22 of the transponder unit 6 through a predetermined internal path, which may have one of the forms described above with reference to the interrogation unit 5, as shown at pulse S11 (waveform 2E). Pulse S11 is processed by the receiving circuitry 22 and causes the detector 24 to produce a pulse S12 (waveform 2F). Pulse S12 produces a further trigger pulse S13·(waveform 2G) which re-triggers the transmitter 30 to transmit an echo pulse from the antenna 20 as shown by pulse S14 (waveform 2H). Echo pulse S14 is received at the interrogation unit 5 after the time delay $t_d$ as shown by pulse S15 (waveform 2C). The receipt there is detected by the detector 38 which produces a pulse S16 (waveform 2D) at a time $T_4$, pulse S16 being passed to the time measuring unit 40 on line 44.

The pulse S14 transmitted by the transponder unit 6 is again also received by the latter's receiving circuitry 22, via the internal path to produce a received pulse S17 (waveform 2E). This in turn produces a detected pulse S18 (waveform 2F) but this does not re-trigger the transmitter 30 because the detector and trigger control unit 24 is arranged to respond to only two immediately following detector output pulses (that is, the pulses S6 and S12, waveform 2F), so detected pulse S18 does not produce a further trigger pulse in waveform 2G.

From the foregoing, it can be seen that the time measuring unit 40 receives pulses at times $T_2$, $T_3$ and $T_4$. From these pulses, the time measuring unit 40 is therefore able to measure two time intervals, identified as time intervals $t_A$ and $t_B$ in Figure 2.

If the delays in the interrogation unit 5 are such that there is a time delay $t_1$ between the leading edge of each signal received by the antenna 14 and the production of the corresponding pulse by the detector unit 38, if the corresponding time delay in the transponder 6 is $t_2$, and if the time delay in the transponder unit 6 between the production of a trigger pulse by the detector 24 and the leading edge of the resultant signal transmitted by the antenna 20 is $t_x$, then it is apparent that

$$t_A = t_d - t_1 + t_2 + t_x + t_d + t_1$$

$$= 2t_d + t_2 + t_x . \qquad (1)$$

It also follows that

$$t_B = t_2 + t_x + t_d + t_1 - t_d - t_1$$

$$= t_2 + t_x \qquad (2)$$

Therefore, from Equations (1) and (2),

$$t_A - t_B = 2t_d$$

Therefore, by measuring the time intervals $t_A$ amd $t_B$, and subtracting the latter from the former, the time measuring unit 40 is able to produce a measurement of twice $t_d$. Because $t_d$ is proportional to the distance between the two units, unit 40 is therefore able to produce with knowledge of the pulse velocity an output on line 46 indicating this distance.

The fact that the output is substantially independant of the internal processing response time delays of the two-units avoids the need for frequent calibration of the units which would be necessary otherwise in order to take account of the time delays. It will be apparent that the apparatus can be used in a position locating system wherein not merely one but several transponder units are employed at different locations with respect to the interrogation unit. The interrogation pulses can then be encoded to address particular transponder units so that the distances of the various transponder units from the interrogation unit can each be measured. If the positions of the transponder units are known, these distances can be used to indicate the position of the interrogation unit. The elimination of the effect on the distance measurement of the internal response time delays within the units is particularly important in such a position locating system because of the considerably greater problem of calibration which would otherwise be involved owing to the number of transponder units.

It is assumed above that the distance requiring to be measured is that between the two antennas, and that the time delay to a pulse travelling from each transmitter to its antenna and from the antenna back to the receiver in the same unit (on being received from the other units), and the time delay to a pulse travelling from each transmitter through the known path to the receiver in the same unit, are both so small as to be negligible.  If this is
not the case, for example if there is a long waveguide
between the circulator and the antenna, there would no
longer be zero time delay between the transmitted signal
of waveform 2B and the received signal of waveform 2C, but
rather a fixed and known time delay.  In that case the
difference between the fixed and known time delay to a
pulse travelling from the transmitter to the point at which
the distance to be measured commences, and from there back
to the receiver in the same unit (on being received from
the other unit), and the fixed and known time delay to a
pulse travelling from the transmitter through the known
path to the receiver in the same unit must be subtracted
from the delay computed for the path to be measured by
$t_A - t_B$.

In an alternative implementation the transponder
unit 6 transmits only one pulse, pulse S8, promptly in
response to the received signal S5.  After a preset delay
which may be any convenient time, the unit 6 transmits
another pulse (denoted here by S8X) which is received by
the interrogation unit 5 and for which the detector 38
produces a pulse (denoted here by S10X).  The transponder
unit 6 treats this pulse S8X as if it were pulse S8 and
produces an echo pulse S14.  The interrogation unit measures
time $t_A$ between pulse S4 and pulse S8, and time $t_B$ between
pulse S10X and pulse S16, proceeding otherwise as described
above.

0098160

Although the system described has involved a radio link, it may also be used to measure time delay or distance along a cable. or other wire link between the two units and along which the pulses are transmitted.

CLAIMS

1.    A method of measuring the distance along a
signal path between local and remote stations comprising
the steps of :-

a)    transmitting an interrogation pulse along
the signal paths from an interrogation unit at the
local station;

b)    receiving the interrogation pulse at a trans-
ponder unit, at the remote station, and transmitting in
response thereto a reply pulse along the signal path,
wherein the transmission of the reply pulse is delayed
following receipt of the interrogation pulse by the internal processing response time of said transponder unit;

c)    further transmitting from said transponder
unit an echo pulse, wherein the echo pulse is transmitted
in response to reception by said transponder unit through
a predetermined internal path in said transponder unit of
an immediately preceding pulse transmitted by said transponder unit so that the time delay between said echo pulse
and said immediately preceding transmitted pulse corresponds to said internal processing response timing;

d)    receiving at said interrogation unit said
pulses transmitted along said signal path from said
transponder unit;

e) measuring a first time interval between transmission from said interrogation unit of said interrogation pulse and reception at said interrogation unit of said reply pulse;

f) measuring a second time interval between reception at said interrogation unit of said echo pulse and of said immediately preceding transmitted pulse; and

g) calculating from said first and second time intervals and the speed of propagation of said pulses along said signal path a value for the distance between said stations which is substantially independant of said internal processing response time.

2. A method as claimed in claim 1 wherein said interrogation pulse is also received at said interrogation unit by a predetermined internal path in said interrogation unit, whereby processing delays in the reception of pulses by said interrogation unit are cancelled when measuring said time intervals.

3. A method as claimed in claim 1 or claim 2 wherein said immediately preceding pulse transmitted by said transponder unit, is constituted by said reply pulse.

4. A method as claimed in claim 1 or claim 2, wherein said immediately preceding pulse transmitted by said transponer unit is a delayed pulse transmitted a preset time delay after transmission of the reply pulse.

5. Apparatus for measuring the distance along a signal path between local and remote stations comprising an interrogation unit at said local station and a trans-- ponder unit at said remote station; the interrogation unit having a transmitter to transmit interrogation pulses along the signal path, a receiver to receive pulses returning from the transponder unit and a time measuring unit to calculate said distance from the time spacing of the interrogation and returning pulses; the transponder unit having a receiver to receive interrogation pulses, a transmitter adapted to transmit at least a first reply pulse along the signal path in response to reception of an interrogation pulse, wherein the first reply pulse is delayed following receipt of the interrogation pulse by the internal processing response time of the transponder unit, a predetermined internal path whereby pulses transmitted by the transmitter of the transponder are fed to be received by the receiver of the transponder, and trigger control means responsive to reception by said internal path of the reply pulse or the last of the reply pulses to trigger the transmitter to transmit an echo pulse with a delay following the immediately preceding reply pulse corresponding to said internal processing response time; said time measuring unit of the interrogation unit being adapted to measure a first time interval between transmission of an interrogation pulse and reception of the first reply pulse, and a second time interval between reception of said echo pulse and of the immediately preceding reply pulse, and to calculate from said intervals and the speed of propagation of said pulses along said signal path a value for said distance which is substantially independant of said internal processing response time.

6. Apparatus as claimed in claim 7 wherein the interrogation unit includes a predetermined internal path for feeding interrogation pulses transmitted by the transmitter of the interrogation unit to be received by the receiver of the interrogation unit, whereby processing delays in the reception of pulses by the interrogation unit are cancelled when measuring said time intervals.

7. Apparatus as claimed in claim 5 or claim 6 wherein the transmitter of the transponder is adapted to transmit said first reply pulse only, so that said echo pulse is transmitted in response to and with said internal processing delay following said first reply pulse.

8. Apparatus as claimed in claim 5 or claim 6 wherein the transmitter of the transponder is adapted to transmit said first and a second reply pulse with a preset delay following said first reply pulse, so that said echo pulse is transmitted in response to and with said internal processing delay following said second reply pulse.

9. An interrogation unit for use in the distance measuring method of claim 1 and including a transmitter to transmit the interrogation pulses along the signal path, a receiver to receive pulses returning from the transponder unit and a time measuring unit adapted to measure a first time interval between transmission of an interrogation pulse and reception of the first reply pulse, and a second time interval between reception of said echo pulse and the immediately preceding pulse transmitted by the transponder unit, and to calculate from said intervals and the speed of propagation of said pulses along said signal path a value for said distance which is substantially independant of said internal processing response time.

10. A transponder unit for use in the distance measuring method of claim 1 and including a receiver to receive interrogation pulses, a transmitter adapted to transmit at least a first reply pulse along the signal path in response to reception of an interrogation pulse, wherein the first reply pulse is delayed following receipt of the interrogation pulse by the internal processing response time of the transponder unit, a predetermined internal path whereby pulses transmitted by the transmitter of the transponder are fed to be received by the receiver of the transponder, and trigger control means responsive to reception by said internal path of the reply pulse or the last of the reply pulses to trigger the transmitter to transmit an echo pulse with a delay following the immediately preceding reply pulse corresponding to said internal processing response time.

11. A position location system comprising an interrogation unit as claimed in claim 9 mounted at a local station of which the position is to be found and a plurality of transponder units as claimed in claim 10 mounted at respective known remote stations, the interrogation and transponder units being arranged such that the transponder units are independantly  addressable by the interrogation unit to transmit reply and echo pulses when addressed by suitably coded interrogation pulses.

FIG. 1.

# FIG. 2.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 845 621 (A.F. HASBROOK) * Figure 1; column 2, line 65 - column 3, line 8 * | 1-3 | G 01 S 13/76 |
| Y | US-A-2 938 202 (J.E. KIRCH et al.) * Column 1, lines 39-72 * | 5 | |
| Y | DE-B-2 413 995 (ELLIOTT BROS.) * Figure 1; column 3, lines 12-16 * | 5 | |
| A | DE-A-2 134 678 (C. HUYGENS LABORATORIUM) * Page 4, lines 1-21 * | 11 | |
| A | US-A-3 513 470 (G. RABOW) * Figure 1 * | | **TECHNICAL FIELDS SEARCHED (Int. Cl. ³)** |
| A | US-A-3 755 814 (F.C. ALPERS) * Abstract * | | G 01 S 13/74 G 01 S 13/76 G 01 S 13/80 |

The present search report has been drawn up for all claims

| Place of search BERLIN | Date of completion of the search 02-09-1983 | Examiner BREUSING J |
|---|---|---|